# EUROPEAN PATENT SPECIFICATION

(11) **EP 4 635 210 B1**
(45) Date of publication and mention of the grant of the patent: **02.09.2026**
(21) Application number: 23700219.1
(22) Date of filing: 12.01.2023
(51) Int. Cl.: H04W 8/08, H04L 67/51, H04L 43/04, H04W 8/06, H04W 8/18, H04W 8/20, H04L 41/0631, H04L 67/52

(54) **TECHNIQUE FOR AOI EVENT MONITORING**
VERFAHREN ZUR AOI-EREIGNISÜBERWACHUNG
TECHNIQUE DE SURVEILLANCE D'ÉVÉNEMENT AOI

(30) Priority: 12.12.2022 EP 22383202
(43) Date of publication of application: 22.10.2025
(73) Proprietor: Telefonaktiebolaget LM Ericsson (publ), 164 83 Stockholm (SE)
(72) Inventor: BARTOLOME RODRIGO, Maria Cruz, 28189 Torremocha de Jarama, Madrid (ES)
(74) Representative: Ericsson
(86) International application number: PCT/EP2023/050585
(87) International publication number: WO 2024/125828

(56) References cited:
- EP-A1- 3 592 008
- EP-A1- 3 890 404
- US-A1- 2022 353 145
- "5G; System architecture for the 5G System (5GS) (3GPP TS 23.501 version 17.6.0 Release 17)", vol. 3GPP SA, no. V17.6.0, 23 September 2022 (2022-09-23), pages 1 - 573, XP014440648, Retrieved from the Internet <URL:http://www.etsi.org/deliver/etsi_ts/123500_123599/123501/17.06.00_60/ts_123501v170600p.pdf> [retrieved on 20220923]

## Description

### Technical Field

The present disclosure generally relates to event monitoring in a mobile communication system. The events relate to terminal devices being served in areas of interest. The technique presented herein can be implemented in the form of methods, computer program products, apparatuses and network systems.

### Background

Mobile communication systems can be divided into so-called areas of interest (AOIs). An AOI specifies a geographical portion within a mobile communication system. AOIs can be sub-divided into sub-areas to achieve a finer granularity. Such sub-areas can, for example be defined to include certain Tracking Areas (TAs), cells, and access nodes (ANs). An AOI can thus be represented by a list of TA identities (TAIs), a set of cell identifiers, certain AN identifiers and so on.

AOIs are flexible tools to implement location-based servicing of terminal devices. For example, the mobile communication system may be configured to provide communication services for certain terminal devices in certain AOIs only. As another example, content providers may offer location-based services for terminal devices being served in a certain AOI. In these examples, a notification is required when a terminal device moves into a certain AOI or leaves that AOI.

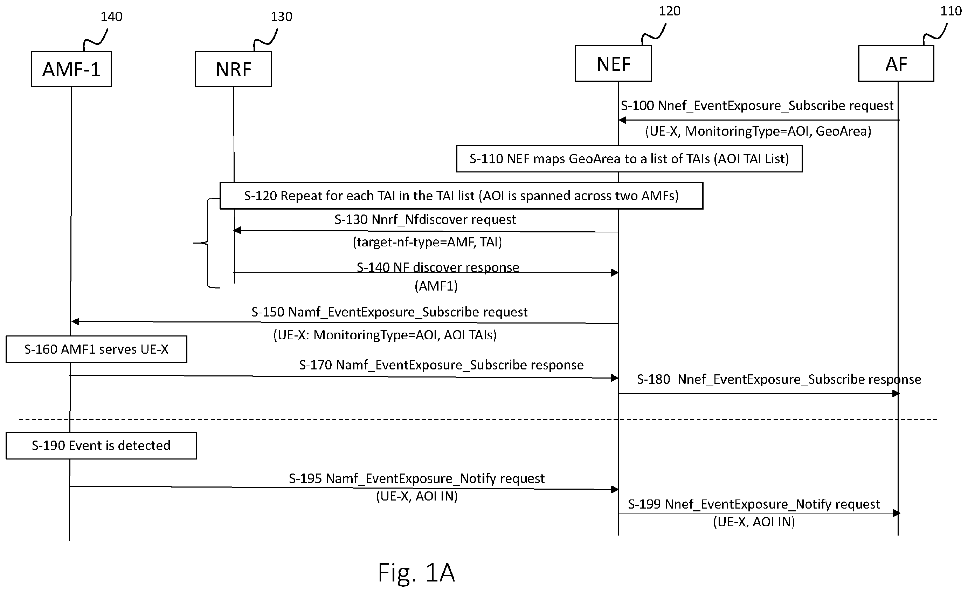

Some mobile communication systems provide a subscription-based event notification mechanism that can also be used for configuring AOI notifications. In the following, one such notification mechanism will be described for an exemplary mobile communication system of the 5^{th} Generation (5G) and with reference to the signalling diagram of Fig. 1A.

The network entities involved in the signalling diagram of Fig. 1A comprise an Application Function (AF) 110 operated, for example, by a content provider. Moreover, Fig. 1A illustrates several network entities of a core network domain of the mobile communication system: a network exposure function (NEF) 120, a network repository function (NRF) 130 as well as an access and mobility management function (AMF) 140. The NEF 120 acts as an entry point into the core network domain for the AF 110. The AF 110 thus interacts with the core network domain through the NEF 120. The NRF 130 is a centralized data repository in the core network domain. The AMF 140 handles access as well as mobility for terminal devices. It is configured to serve terminal devices within in a dedicated AOI or a dedicated sub-area thereof.

In step S-100 of Fig. 1A, the AF 110 sends an event subscription request (here: an Nnef_EventExposure_Subscribe message) to the NEF 120. With this event subscription request, the AF 110 subscribes to be notified of a monitoring event of the type "AOI" for a dedicated terminal device "UE-X". That is, the AF 110 requests to be notified when the terminal device "UE-X" enters (or leaves) the indicated geographical area.

In step S-110, the NEF 120 obtains one or multiple TAIs. To this end, the NEF 120 translates the geographical area indicated by the AF 110 into TAIs. The resulting list of TAIs defines a dedicated AOI corresponding to the geographical area indicated by the AF 110.

In step S-120, for each TAI indicated in the TAI list, sub-steps S-135 and S-140 are performed. In more detail, the NEF 120 needs to identify the one or more AMF(s) 140 that serve the TAIs of the TAI list (i.e., that serve the AOI). To this end, the NEF 120 performs an NRF discovery procedure using as input each TAI obtained in step S-110. The NRF discovery procedure includes sending, in step S-130, an Nnrf_Nfdiscover request to the NRF 130 and receiving, from the NRF 130, an NF discover response in step S-140. The Nnrf_Nfdiscover request includes only a single TAI from the TAI list, in order for the NRF 130 to provide the particular AMF 140 serving the TA having this particular TAI (as the particular AMF 140 may also serve other TAs indicated in the TAI list). In the present example, the NF discover response returns a single AMF 140 (here: "AMF1") serving the TA with the particular TAI. This NRF discovery process is repeated for each TAI indicated in the TAI list.

In step S-150, the NEF 120 subscribes to each AMF 140 (here: "AMF1") serving one or more TAIs as indicated in the TAI list. The subscription relates to the same event as that indicated by the AF 110 in step S-100. In more detail, the NEF 120 sends an AOI event subscription message (here: an Namf_EventExposure_Subscribe message), indicating the AOI TAI list determined in step S-110 and the terminal device "UE-X" associated with the description.

In the exemplary signalling diagram of Fig. 1A, it is assumed that the AMF 140 is currently serving the terminal device "UE-X" (see step S-160). In this case, the AOI event subscription procedure works properly as the AMF 140 can store information associated with the subscription message (see step S-150) locally in context information maintained by the AMF 140 for the terminal device "UE-X".

In the further signalling procedure, the AMF 140 returns, as a confirmation of the subscription message of step S-150, an Namf_EventExposure_Subscribe response in step S-180 to the NEF 120. The NEF 120 forwards this confirmation to the AF 110 in step S-180.

At this point, the AOI event subscription becomes applicable and the AMF 140 triggers AOI event monitoring. Since the terminal device "UE-X" is being served by the AMF 140 in a TA within the AOI, the AOI event is detected in step S-190. The AMF 140 thus provides in step S-195 the requested AOI event notification in an Namf_EventExposure_Notify message to the NEF 120, which forwards this notification in step S-199 to the AF 110. The content of the notification, i.e., "AOI IN", informs the AF 110 that the terminal device "UE-X" is served in the geographical area indicated by the AF 110 in step S-100.

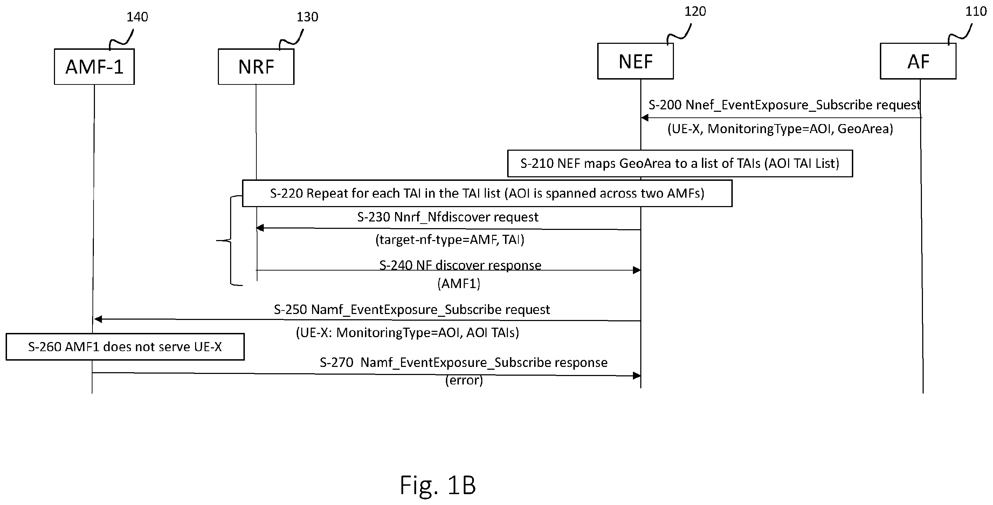

It has been found that the notification procedure illustrated in the signalling diagram of Fig. 1A does not always work as expected. In particular, there may be malfunctions in case the terminal device is not being served by the AMF 140 when the AMF 140 receives the Namf_EventExposure_Subscribe request (see step S-150 in Fig. 1A). Such malfunctions will now be explained in greater detail with reference to the signalling diagram of Fig. 1B.

Steps S-200 to S-250 of Fig. 1B correspond to steps S-100 to S-150 as described above with reference to Fig. 1A, respectively. In deviation from step S-160, it is determined in step S-260 that the AMF 140 currently does not serve the terminal device "UE-X" for which the AMF 140 has received an AOI event subscription message in step S-250. This also means that the AMF 140 presently does not maintain a context for terminal device "UE-X", which could be used as a "receptacle" for storing information associated with the AOI event subscription. As a consequence, the AMF 140 returns an error message to the NEF 120 in step S-270. This also means that the AOI event subscription does not become applicable and the event is not monitored by the AMF 140. In other words, the subscription will fail in the AMF 140 if the AMF 140 is not currently serving the terminal device "UE-X" when a corresponding AOI event subscription message is received in step S-250.

To still make the AOI event subscription at the AMF 140 applicable to terminal device "UE-X", the AF 110 and the NEF 120 could repeatedly re-attempt to create the subscription, e.g., by periodically re-transmitting the messages in steps S-100/S-200 und S-150/S-250 up to a point in time when the AMF 140 is actually serving the terminal device "UE-X". Evidently, such an approach would not be a resourceefficient solution.

It has been found that similar problems as described above may occur even in cases in which the AOE event subscription is stored successfully by the AMF 140 in context information maintained for a particular terminal device. In case the terminal device is deregistered from the AMF 140 (e.g., because of an implicit "detach" due to an extended inactivity of the terminal device), the associated context information will however be deleted by the AMF 140. As a result, also the AOI event subscription will be lost. When the terminal device registers back at the AMF 140, the subscription no longer exists and the AOI event will be no longer monitored.

US 2022/353145 A1 discloses network entities and methods, which can support the analytics generation with an enhanced data collection. The goal in this document is to determine past and/or current association information for an area of interest, e.g. past and/or current 5GS entities serving the area of interest.

5G; System architecture for the 5G System (5GS (3GPP TS 23.501 version 17.6.0 Release 17) discloses that if an NF service consumer subscribes to the UE mobility event notification service provided by AMF for reporting of UE presence in Area Of Interest, the AMF tracks UE's location considering UE's CM state and using NG-RAN procedures (if RRC Inactive state applies to NG-RAN) in order to determine the UE presence in the Area Of Interest. Upon detecting the change of the UE presence in the Area Of Interest, the AMF notifies the UE presence in the Area Of Interest and the new UE location to the subscribed NF consumer.

### Summary

There is a need for a technique that avoids one more of the above or other drawbacks, and that enables an efficient event subscription procedure in an AOI context.

According to a first aspect, a method of triggering event monitoring as defined in claim 1 is provided.

The AOI event subscription control information indicates for each of one or more network entities, one or more sub-areas of the AOI associated with the respective network entity (e.g., served by the respective network entity). In such a case, determining if the AOI event subscription shall be applied to the terminal device may comprise determining if the AOI event subscription control information indicates the serving network entity in association with (e.g., mapped to) a sub-area in which the terminal device is served by the serving network entity.

Determining if the AOI event subscription shall be applied to the terminal device may in some variants comprise determining if the serving network entity has received an AOI event subscription message indicative of the served sub-area. The AOI event subscription message may be indicative of a conditional subscription that can become applicable dependent on a content of the AOI event subscription control information.

The method may comprise receiving the AOI event subscription message. This message may be indicative of one or more sub-areas for which the AOI event subscription can (e.g., conditionally) apply. The AOI event subscription message may not yet be indicative of any particular terminal device (e.g., for which the subscription shall apply). The AOI event subscription may not become applicable until a particular terminal device has been identified to which it shall be applied (and possibly one or more further conditions are met). In some variants, the AOI event subscription shall selectively be applied to terminal devices that are served by the network entity in one of the one or more sub-areas indicated in the AOI event subscription message. The AOI event subscription message may be received prior to the step of registering as the serving network entity.

The AOI event subscription message may be received from an NEF of a 5^{th} Generation-, 5G-, enabled core network domain, in particular in an Namf_EventExposure_Subscribe message, or from a service capability exposure function gateway (SCEF) of a 4^{th} Generation-, 4G-, enabled core network domain. The method may be performed by an AMF of a 5G-enabled core network domain or a Mobility Management Entity (MME) of a 4G-enabled core network domain.

Registering as the serving network entity may comprise sending a registration message. The registration message may be sent (i) to one of a UDR and a UDM of a 5G-enabled core network domain or (ii) to one of a UDR and a home subscriber server (HSS) of a 4G-enabled core network domain. The method may comprise receiving subscriber data for the terminal device in response to the registration message. The AOI event subscription control information may be received together with or as part of the subscriber data.

The AOI may include one or more sub-areas. Each sub-area may be associated with (e.g., map to) at least one of a dedicated TAI, a dedicated cell identifier, a dedicated access node identifier and a dedicated tracking area code (TAC).

In some implementations, AOI notification event monitoring comprises determining that the terminal device has entered or left the AOI, and sending a corresponding AOI event notification (e.g., "AOI IN" or "AOI OUT") towards a server in a content provider domain. The AOI event notification may also be indicative of the associated terminal device.

In a second aspect, an apparatus is provided for triggering event monitoring as defined in claim 14.

The apparatus of the second aspect may be adapted to perform the method of the first aspect.

### Brief Description of the Drawings

Further aspects, details and advantages of the present disclosure will become apparent from the detailed description of exemplary embodiments below and from the drawings, wherein:
- Fig. 1A: is a signalling diagram illustrating a successful AOI event subscription;
- Fig. 1B: is a signalling diagram illustrating a non-successful AOI event subscription;
- Figs. 2 & 3: are block diagrams illustrating a system and apparatus realizations of the present disclosure;
- Figs. 4A to D: are flow diagrams illustrating method realizations of the present disclosure;
- Figs. 5A & B: are signalling diagrams illustrating further realizations of the present disclosure.

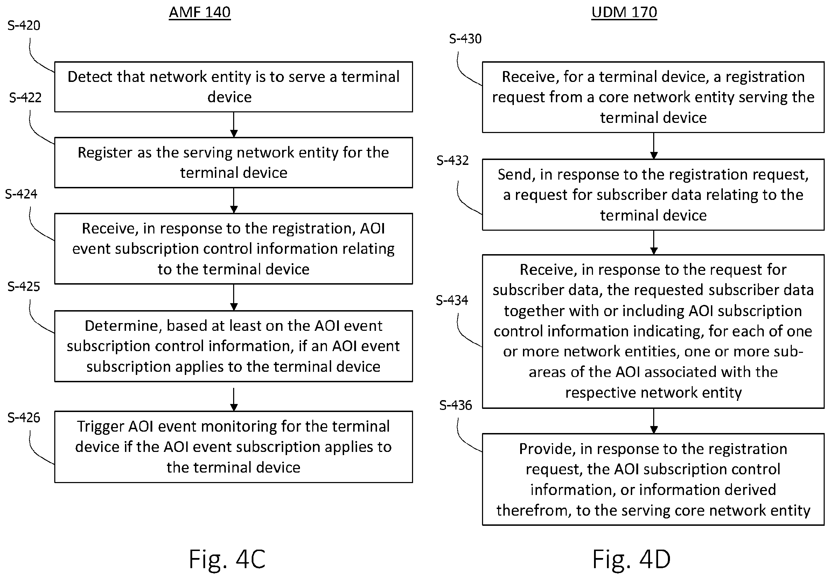

The invention is related to the subject-matter of Fig. 4C and Fig. 5C. The other realizations are not covered by the claimed invention, they are only useful to understand the invention.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details, without however departing from the scope of the invention as defined by the appended claims.

While, for example, the following description focuses on an exemplary core network configuration in accordance with 5G specifications, the present disclosure is not limited in this regard. The present disclosure could, for example, also be implemented in other mobile communication systems having a core network domain complying with 4G specifications or beyond-5G specifications.

Those skilled in the art will further appreciate that the steps, services and functions explained herein may be implemented using individual hardware circuits, using software functioning in conjunction with a programmed processor or general purpose computer, using one or more application specific integrated circuits (ASICs) and/or using one or more digital signal processors (DSP). It will also be appreciated that when the present disclosure is described in terms of a method, it may also be embodied in one or more processors and one or more memories coupled to the one or more processors, wherein the one or more memories store one or more computer programs that control the one or more processors to perform the steps, services and functions disclosed herein when executed by one or more processors.

In the following description of exemplary realizations of the present disclosure, the same reference numerals denote the same or similar components.

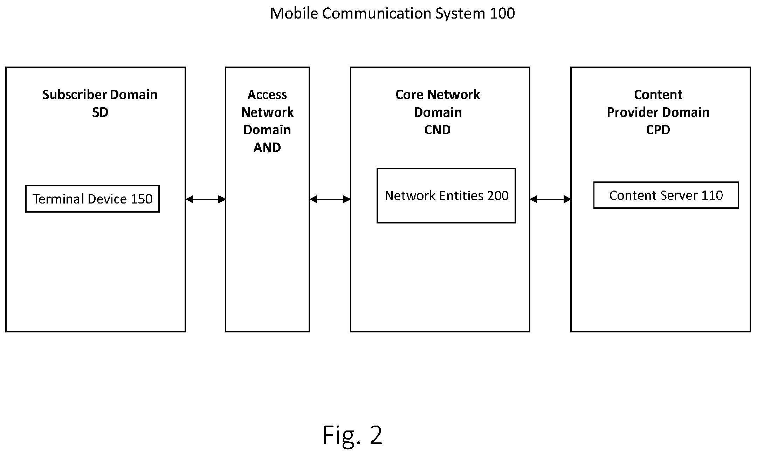

Fig. 2 illustrates an embodiment of a mobile communication system 100 in which the present disclosure can be realized. The mobile communication system 100 may be configured as a subscription-based cellular communication network operated by a mobile network operator (MNO).

As shown in Fig. 2, the mobile communication system 100 comprises a content provider domain (CPD) configured to provide digital content to a subscriber domain (SD). The system 100 further comprises a core network domain (CND) and an access network domain (AND) functionally arranged between the CPD and the SD. In some variants, at least the CND and the AND are split into a user plane for transporting application traffic (e.g., digital content) and a control plane for transporting control signalling. As understood herein, a particular domain comprises one or more devices, nodes or functions under control of a particular domain owner, such as a subscriber, an MNO or a content provider.

The CND and the AND each comprises one or more network entities, such as network nodes or network functions (NFs). For example, the AND may comprise one or more access points or base stations (not shown) configured to establish one or more wireless communication links to the SD. The CND comprises one or more core network entities 200, such as one or more AMFs, an NEF, an UDR, an UDM, and others.

The SD comprises one or more terminal devices 150 configured to wirelessly communicate with the AND under a subscription regime. Exemplary terminal devices 150 comprise a user equipment- (UE-) type device (e.g., a smartphone, tablet or television set) or an Internet of Things- (IoT-) type device (e.g., a car or a wearable device such as a head-, hand- or body-mounted device) with wireless communication capabilities towards the AND.

With continued reference to Fig. 2, the system 100 further comprises a content server 110 (e.g., an Internet-based server offering, for example, media download or media streaming services). The content server 110 is located in the CPD and may, e.g., in a 5G scenario, implement the AF of Figs. 1A and 1B. The content server 110 is in some variants configured to provide location-based services to the one or more terminal devices 150 in the SD. Such location-based services may be limited to a certain geographical area.

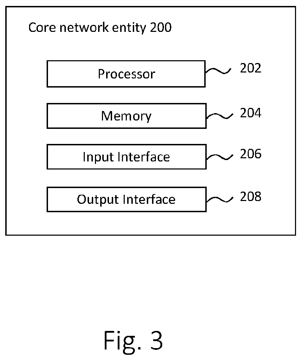

Exemplary realizations of the core network entities 200 illustrated in Fig. 2 will now be explained with reference to Fig. 3. As illustrated in Fig. 3, in one exemplary hardware implementation, each of the entities 200 comprises a processor 202 and a memory 204 coupled to the processor 202. The memory 204 stores program code that controls operation of the processor 202 to implement one or more aspects of the present disclosure. As understood herein, the processor 202 may be realized using any processing circuitry and is not limited to, for example, a single, localized processing core but may, for example, also have a distributed (e.g., cloud-based) topology. Each of the entities 200 further comprises an optional input interface 206 and an optional output interface 208 for communication with other entities in the CND or outside the CND.

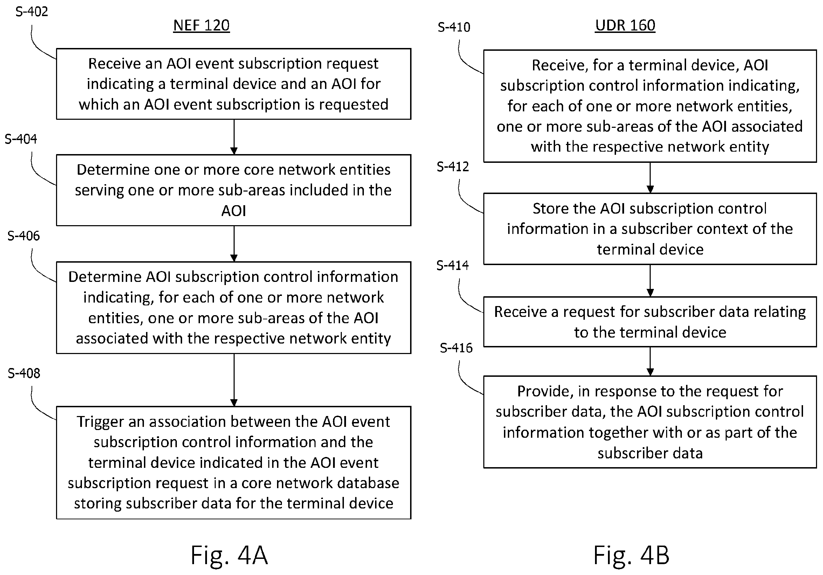

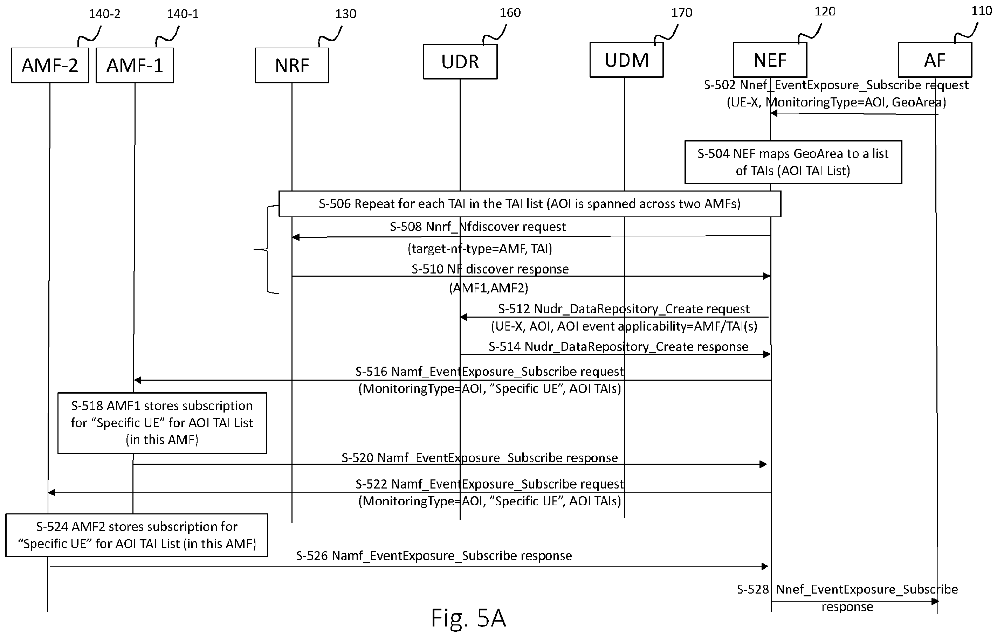

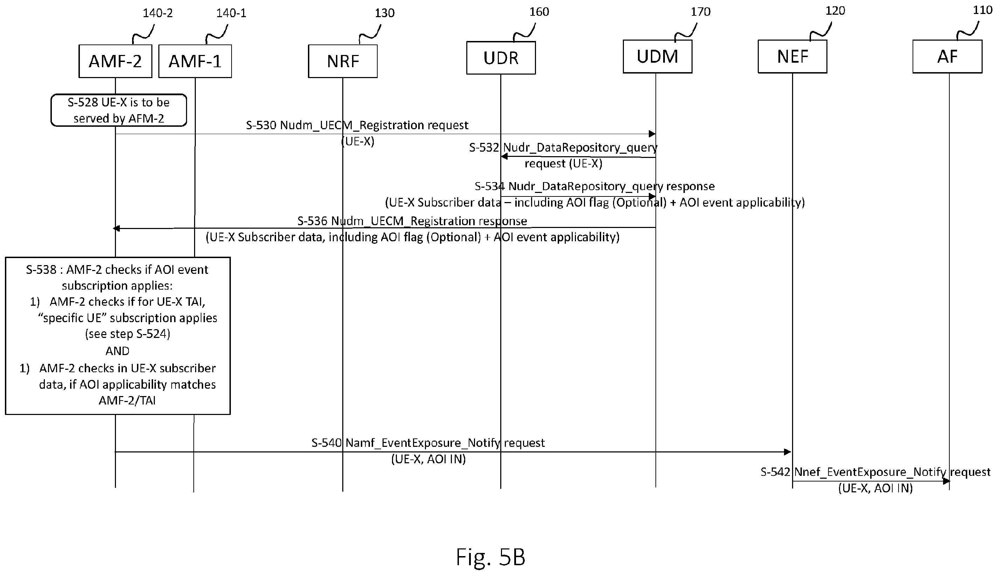

In the following description, an exemplary 5G realization implementing aspects of the present disclosure will be described with reference to the flow diagrams of Figs. 4A to 4D and the signalling diagrams of Figs. 5A and 5B, and it will be apparent to one skilled in the art that similar signalling realizations will apply in case of a 4G or a combined 4G/5G implementation.

Compared to the signalling diagrams of Figs. 1A and 1B, the signalling diagrams of Figs. 5A and 5B further illustrate a UDR 160 and a UDM 170. The UDM 170 centrally handles data (in particular subscriber data) in the CND. To this end, the UDM 170 hosts or has access to the UDR 160 that, in turn, hosts a subscriber database. The UDM 170 itself may store session context information for later retrieval when a session is created. Some NFs may access the UDR 160 directly and some only via the UDM 170.

3GPP TS 23.501 V15.4.0 (2018-12) and later defines architectural aspects of a 5G service based architecture (SBA). According to this SBA, NFs use service-based interactions to consume services from other NFs. The discovery of services and of NFs producing them is provided by the NRF 130. Service producing NFs register, update or deregister their profiles in the NRF 130. Service consuming NFs discover services offered by NF producer instances by querying the NRF 130 about NF instances offering services of a given type. NFs may subscribe and unsubscribe to changes in the status of NFs registered in the NRF 130. Based on such subscriptions, the NRF 130 or other NFs may notify subscriber NFs of local status changes. This subscription framework is utilized in the context of the following embodiments for triggering AOI event notifications.

Presently there are three types of the AOI event subscriptions from the NEF 120 to the AMF 130 (see Figs. 1A and 1B), either the subscription applies to "any terminal device" (that is, any terminal device 150 that happens to be located in an AOI served by the AMF 130), a group of terminal devices 150, or one single terminal device 150. Details in this regard can be gathered from 3GPP TS 29.522 V17.5.0 (identification of an individual terminal device 150 via the "gpsi" attribute; identification of a group of terminal device(s) 150 via the "exterGroupId" attribute; identification of any terminal device 150 via the "anyUeInd" attribute) and 3GPP TS 29.503 V17.6.0 (see the UDM services indicated in sections 5.5.2.2.2 and 6.4.3.2.2). See also 3GPP TS 29.122 V17.5.0. In the context of the following embodiments, a fourth AOI event subscription type is presented, which is also called "specific UE" herein.

In case the subscription applies to one individual terminal device 150, and if the AMF 140 currently does not hold the terminal device context, then the subscription will fail (as has been explained with reference to Figs. 1A and 1B above). To avoid such a failure, in the embodiments illustrated in Figs. 4A to 4D, 5A and 5B, the NEF 110 stores further subscriber data (possibly via the UDM 170) in the UDR 160. The further subscriber data are referred to as AOI subscription control information herein and may be evaluated by the AMF 140 in the context of the AOI event subscription type "specific UE" to determine if the AOI event subscription shall be applied to a particular terminal device 150.

In the embodiments illustrated in Figs. 4A to 4D, 5A and 5B, the NEF 110 is configured to send an AOI event subscription message for the AOI event subscription type "specific UE" to AMF 140. The AOI event subscription type "specific UE" allows this subscription to be stored successfully in the AMF context (and not per terminal device 150). This can also be seen as a conditional subscription. When a certain terminal device 150 is to be served by the AMF 140, the AMF 140 obtains the AOI subscription control information (in a registration response), and then determines whether the subscription shall apply ("unconditionally") for this terminal device 150.

As such, a new type of a subscription to the AMF 140 is proposed in this exemplary embodiment, that applies to certain terminal devices 150 ("specific terminal device"). The AMF 140 obtains knowledge for which terminal devices 150 the subscription shall apply based on the AOI event subscription control information as obtained during registration to the UDM 170.

As such, only one subscription request is required per AMF 140, rather than managing a subscription per terminal device 150. The AMF 140 then takes control (based on the AOI event subscription control information) as to whether and when a subscription shall apply.

Referring now to Figs. 4A and 5A, the procedure starts with the NEF 120 receiving an AOI event subscription request from the AF 110 ("Nnef_EventExposure_Subscribe request") in steps S-402 and S-502. This request indicates a particular terminal device ("UE-X") and a particular AOI (defined by a geographical area "GeoArea" in this example, such as a certain city or a part thereof) for which an AOI event notification is requested. The AF 110 may use such AOI event notifications to provide a location-based service to the terminal device UE-X.

In step S-404 of Figs. 4A, the NEF 120 determines one or more core network entities (i.e., AMFs 140) serving one or more sub-areas included in the AOI (each sub-area may be served by one or more AMFs 140). To this end, the NEF 120 first translates the AOI into one or multiple TAIs, as illustrated by step S-504 of Fig. 5A. In this way, a list of TAIs is obtained that correspond to the AOI. In a second step, the NEF 120 identifies the one or more AMFs 140 serving the TA associated with these TAIs by looking up for each TAI in the TAI list (step S-506 in Fig. 5A) the AMF 140 serving this TA (steps S-508 and S-510 in Fig. 5A). In more detail, the NEF 120 in step S-508 sends a Nnrf_Nfdiscover request for a given TAI (with the NF indication "AMF") to the NRF 130 and receives, in step-S-510, an NF discover response from the NRF 130.

In the example of Fig. 5A, it is assumed that the TA corresponding to the TAI signalled to the NRF 130 in step S-508 is served by two AMFs 140-1, 140-2. In other variants, only one AMF 140 may serve a given TA. Each AMF 140 may in principle be related to one or multiple TAIs from the TAI list. From the result obtained in steps S-404 and S-508/S-510, the NEF 120 determines, in step S-406, AOI subscription control information indicating, for each of one or more AMFs 140, one or more sub-areas of the AOI (in terms of TAIs) served by and, thus associated with, the respective AMF. As an example, the AOI subscription control information can take the form of a mapping of the AOI TAIs to one or multiple AMFs 140. In the mapping, for each AMF 140 one of multiple TAIs served by this AMF may be indicated. Of course, the AOI subscription control information may also have other formats or contents.

Then, in step S-408, the NEF 120 triggers an association between the AOI subscription control information and the terminal device "UE-X" indicated in the AOI event subscription request received in step S-402/S-502. The association is triggered in the UDR 150, i.e., in a core network database storing subscriber data for the terminal device "UE-X" (and other terminal devices 150). In more detail, the NEF 120 sends an Nudr_DataRepository_Create request to the UDR 160 (see step S-512 in Fig. 5A) to trigger storage of the AOI subscription control information for this terminal device (and to indicate that for this terminal device an AOI event notification is requested). The AOI subscription control information defines an event applicability, i.e., for which AMFs 140 (and TAIs) the AOI event subscription applies. The AOI subscription control information will be read by an AMF 140 at registration to the UDM 170 (Nudm_UECM_Registration), as will be explained below. For this reason, the proposed procedure fits under the Amf3gppAccessRegistration scheme (see 3GPP TS 29.503 V. 17.6.0, clause 5.3.2.2.2). The NEF 120 therefore is configured to store information in the UDR 160 that is expected to be read by an AMF 140. As an alternative, the NEF 120 may store the AOI subscription control information in the UDR 160 via the UDM 170. In step S-514, the UDR 160 confirms the request of step S-512 via a S-514 Nudr_DataRepository_Create response.

Referring now to step S-410 of Fig. 4B, the UDR 160 thus receives the AOI subscription control information from the NEF 120 via the Nudr_DataRepository_Create request (see also step S-512 in Fig. 5A). In step S-412, the UDR 160 stores the AOI subscription control information in a subscriber context of the terminal device "UE-X" (e.g., as part of the associated subscriber information or linked thereto). This storing of the AOI notification information has been triggered by the NEF 120 in step S-408 of Fig. 4A.

Returning now to Fig. 5A, the NEF 120 sends in steps S-516 and S-522 an AOI event subscription message (i.e., an Namf_EventExposure_Subscribe request) to each of the AMFs 140-1, 140-2 "discovered" in steps S-506 to S-510. These messages include configuration information to configure the AMFs 140-1, 140-2. The configuration information includes a "specific UE" flag (or a similar indicator) and the AOI TAIs for which the respective AMF 140-1, 140-2 is to be configured to provide AOI event notifications on a subscription basis (note that an AMF 140 may serve a plurality of TAs, and not TAs all may be part of the AOI).

The "specific UE" flag configures the respective AMF 140-1 and 140-2 to process the AOI TAIs received in steps S-516 and S-522 when having to determine if an AOI event subscription shall be applied to a specific terminal device 150 that is to be served by the respective AMF 140-1 and 140-2 (as will be explained in greater detail below). In some variants, the "specific UE" flag may configure the respective AMF 140-1 and 140-2 to store the associated TAIs in a certain subscription type context for later retrieval (see discussion of step S-538 below).

It is to be noted that a particular terminal device 150 (such as "UE-X") is not indicated in the configuration information since a resulting AOI event subscription shall only apply to "specific" terminal devices 150 based on the AOI event subscription control information stored in the UDR 160 in step S-512 (see also step S-408 in Fig. 4A and step S-410 in Fig. 4B).

In steps S-518 and S-524, the respective AMF 140-1, 140-2 stores the configuration information as part of its AMF context information, and then confirms this in an Namf_EventExposure_Subscribe response to the NEF 120. The NEF 120, upon receipt of the Namf_EventExposure_Subscribe responses in steps S-520 and S-526, sends an Nnef_EventExposure_Subscribe response in step S-528 to the AF 110. While two AMFs 140 are involved in the signalling diagram of Fig. 5A, more or less AMFs 140 may be involved in other scenarios, also depending on the size of the particular AOI signalled by the AF 110 in step S-502.

Referring now to Figs. 4C, 4D and 5B, it is assumed that at some point, the terminal device "UE-X" (as indicated by the AF 110 in step S-502 of Fig. 5A) moves into a TA served by the AMF 140-2, so that the AMF 140-2 detects that it is to serve that terminal device (step S-420 in Fig. 4C and step S-528 in Fig. 5B). The AMF 140-2 will thus register itself as the serving AMF for the terminal device "UE-X" to the UDM 170 (step S-422 in Fig. 4C). To this end, it sends in step S-530 of Fig. 5B an Nudm_UECM_Registration request indicative of terminal device "UE-X" to the UDM 170 (see step S-430 in Fig. 4D).

In response to the registration request the UDM 170, in step S-432 of Fig. 4D, sends to the UDR 160 a request for subscriber data relating to the terminal device "UE-X" (see step S-532 in Fig. 5B: Nudr_DataRepository_query request, and step S-414 in Fig. 4B). The UDR 160 responds to this request with a Nudr_DataRepository_query response (see step S-534 in Fig. 5B and step S-416 of Fig. 4B) that provides the AOI event subscription control information (i.e., the AOI event applicability) together with or as part of the subscriber data. Moreover, the response further includes an optional new indication, or flag, "AOI for this specific UE", which triggers a dedicated behaviour of the AMF 140-2. This information is received by the UDM 170 in step S-434 of Fig. 4D, provided by the UDM 170 to the AMF 140-2 in step S-436 of Fig. 4D (see Nudm_UECM_Registration response in step S-536 of Fig. 5B) and received by the AMF 140-2 in step S-424 of Fig. 4C.

When the AMF 140-2 detects the flag "AOI for this specific UE" in the subscriber data received in step S-536, or responsive to the received AOI event subscription control information in case no such flag is implemented, the AMF 140-2 performs the checks indicated in step S-538 of Fig. 5B to determine if an AOI event subscription shall be applied to the terminal device "UE-X". This determination is generally based at least on the AOI event subscription control information received in step S-538 of Fig. 5B (see also step S-425 in Fig. 4C) and, in the present realization, also on the configuration information received earlier in step S-524 of Fig. 5A. The AMF 140-2 triggers AOI event monitoring for the terminal device ""UE-X" if it is determined in step S-425 of Fig. 4C that the AOI event subscription shall be applied to the terminal device "UE-X" (see step S-426 of Fig. 4C).

Referring to step S-538 of Fig. 5B, the AMF 140-2 checks if the TAI of the TA where the terminal device "UE-X" is located is associated with an AOI event subscription of the type "specific UE". To this end, the AMF 140-2 checks its local AMF context information if that TAI has been indicated in an AOI event subscription message in a "specific UE" context. In the presently considered scenario, this is the case (see step S-524).

Still referring to step S-538 of Fig. 5B, the AMF 140-2 also checks the subscriber data received in step S-536 to determine if the AOI event subscription control information ("AOI event applicability" in Figs. 5A and 5B) indicates the AMF 140-2 in association with the TAI of the TA in which the terminal device "UE-X" is served by the AMF 140-2. In the present case, the AOI event subscription control information will indicate for each of the AMF 140-1 and the AMF 140-2 the TAIs of the AOI of interest that are associated with the respective AMF 140-1 and 140-2 (as explained above with reference to step S-512).

If both conditions are met, then it is determined in step S-538 that the AOI event subscription applies for the terminal device "UE-X", and the AMF 140-2 proceeds accordingly by triggering AOI event monitoring (e.g., via an EeSubscription indication as generally known).

In the present case, the AMF 140-2 thus determines that the terminal device "UE-X" is located in the AOI (status "AOI IN"). As a result, the AMF 140-2 sends an AOI event notification (here: an Namf_EventExposure_Notify request) indicative of "AOI IN" for terminal device "UE-X" to the NEF 120, which forwards this information in an Nnef_EventExposure_Notify request to the AF 110 (see steps S-540 and S-542 in Fig. 5B). Based on this information, the AF 110 may start supplying location-based services to the terminal device "UE-X". The AF 110 may stop providing the location-based services in response to an AOI event notification indicating "AOI OUT" when the AMF 140-2 has determined that the terminal device "UE-X" has left the AOI that is of interest to the AF 110.

As has become apparent from the above description of exemplary embodiments, the technique presented herein overcomes one or more of the drawbacks discussed above with reference to Fig. 1B. In particular, AOI event subscriptions can also be realized for terminal devices 150 that are presently not served by a particular AMF 140 in a particular sub-area of an AOI of interest. Only a single AOI event subscription message is needed per AMF 140, rather than having to manage a subscription per terminal device 150. It is the AMF 140 that locally takes control (see step S-538) of whether and when an AOI event subscription shall apply to a particular terminal device 150. This AMF-based control can optionally be realized via a new subscription type that applies to specific terminal devices ("specific UE") only. The AMF 140 obtains knowledge for which specific terminal devices 150 the AOI subscription shall apply based on extended subscriber information received in the context of registration to the UDM 170.

In some variants, the UDM 170 may be involved in authorizing AOI event subscriptions on per a terminal-basis. Such an approach is not possible in the scenarios discussed above with reference to Figs. 1A and 1B, as the UDM 170 is not involved in the related signalling. In the procedures discussed above with reference to Figs. 4A to 5B, the UDM 170 may, for example, selectively authorize an AOI event subscription (e.g., based on certain criteria defined by one or both of the MNO and individual subscribers). If an AOI event subscription is not authorized, the UDM 170 may refrain from transmitting the AOI event subscription control information in step S-536. As a result, the AMF 140 will not monitor the event (and evidently, not send a related notification).

## Claims

1. A method of triggering event monitoring for an event indicative of whether a terminal device (150) is served in an area of interest, AOI, the method comprising the following steps performed by a network entity (140) in a core network domain of a mobile communication system (100):
detecting (S-420; S-528) that the network entity (140-2) is to serve a terminal device (150) in a sub-area;
registering (S-422; S-530) as the serving network entity (140-2) for the terminal device (150);
receiving (S-424; S-536), in response to the registration, AOI event subscription control information relating to the terminal device (150);
determining (S-425, S-538), based at least on the AOI event subscription control information, if an AOI event subscription shall be applied to the terminal device (150); and
triggering (S-426; S-538) AOI event monitoring for the terminal device (150) if the AOI event subscription shall be applied to the terminal device (150), wherein the AOI includes one or more sub-areas, and wherein the AOI event subscription control information indicates, for each of one or more network entities (140-1, 140-2), one or more sub-areas of the AOI associated with the respective network entity (140-2).

2. The method of claim 1, wherein
determining (S-426; S-538) if the AOI event subscription shall be applied to the terminal device (150) comprises determining if the AOI event subscription control information indicates the serving network entity (140-2) in association with the sub-area in which the terminal device (150) is served by the serving network entity (140-2).

3. The method of claim 1 or 2, wherein
determining if the AOI event subscription shall be applied to the terminal device (150) comprises determining if the serving network entity (140-2) has received (S-516, S-522) an AOI event subscription message indicative of the sub-area in which the terminal device (150) is served by the serving network entity (140-2).

4. The method of claim 3, comprising
receiving (S-516, S-522) the AOI event subscription message indicative of one or more sub-areas for which the AOI event subscription can apply.

5. The method of claim 4, wherein
the AOI event subscription message is not indicative of any particular terminal device (150), wherein the AOI event subscription shall selectively be applied to terminal devices (150) that are served by the network entity (140-2) in one of the one or more sub-areas indicated in the AOI event subscription message.

6. The method of any of claims 3 to 5, wherein
the AOI event subscription message is received prior to the step of registering as the serving network entity (140-2).

7. The method of any of claims 3 to 6, wherein
the AOI event subscription message is received from a network exposure function, NEF, (120) of a 5^{th} Generation-, 5G-, enabled core network domain, in particular as an Namf_EventExposure_Subscribe message, or from a service capability exposure function gateway, SCEF, of a 4^{th} Generation-, 4G-, enabled core network domain.

8. The method of any of the preceding claims, wherein
the method is performed by an access and mobility management function, AMF, (140) of a 5^{th} Generation-, 5G-, enabled core network domain or a Mobility Management Entity, MME, of a 4^{th} Generation-, 4G-, enabled core network domain.

9. The method of any of the preceding claims, wherein
registering as the serving network entity comprises sending (S-530) a registration message.

10. The method of claim 9, wherein
the registration message is sent (i) to one of a unified data repository, UDR, (160) and a unified data management, UDM, entity (170) of a 5th Generation-, 5G-, enabled core network domain or (ii) to one of a unified data repository, UDR, and a home subscriber server, HSS, of a 4th Generation-, 4G-, enabled core network domain.

11. The method of claim 9 or 10, comprising
receiving (S-536) subscriber data for the terminal device (150) in response to the registration message, wherein the AOI event subscription control information is received together with or as part of the subscriber data.

12. The method of any of the preceding claims, wherein
the AOI includes one or more sub-areas, wherein each sub-area is associated with at least one of a dedicated tracking area identity, TAI, a dedicated cell identifier, a dedicated access node identifier and a dedicated tracking area code, TAC.

13. The method of any of the preceding claims, wherein
AOI notification event monitoring comprises determining that the terminal device (150) has entered or left the AOI, and sending a corresponding AOI event notification towards a server (110) in a content provider domain.

14. An apparatus (140-2) for triggering event monitoring for an event indicative of whether a terminal device (150) is served in an area of interest, AOI, the apparatus being configured to be comprised by a network entity in a core network domain of a mobile communication system (100) and adapted to:
detect (S-420; S-528) that the network entity (140-2) is to serve a terminal device (150) in a sub-area;
register (S-422; S-530) as the serving network entity (140-2) for the terminal device (150);
receive (S-424; S-536), in response to the registration, AOI event subscription control information relating to the terminal device (150);
determine (S-425, S-538), based at least on the AOI event subscription control information, if an AOI event subscription shall be applied to the terminal device (150); and
trigger (S-426; S-538) AOI event monitoring for the terminal device (150) if the AOI event subscription shall be applied to the terminal device (150), wherein the AOI includes one or more sub-areas, and wherein the AOI event subscription control information indicates, for each of one or more network entities (140-1, 140-2), one or more sub-areas of the AOI associated with the respective network entity (140-2).

15. The apparatus of claim 14, adapted to perform the method of any of claims 2 to 13.

## Patentansprüche

1. Verfahren zum Auslösen einer Ereignisüberwachung für ein Ereignis, das angibt, ob eine Endgerätevorrichtung (150) in einem Bereich von Interesse, AOI, bedient wird, das Verfahren umfassend die folgenden Schritte, die durch eine Netzwerkentität (140) in einer Kernnetzwerkdomäne eines Mobilkommunikationssystems (100) durchgeführt werden:
Erfassen (S-420; S-528), dass die Netzwerkentität (140-2) eine Endgerätevorrichtung (150) in einem Teilbereich zu bedienen hat;
Registrieren (S-422; S-530) als die bedienende Netzwerkentität (140-2) für die Endgerätevorrichtung (150);
Empfangen (S-424; S-536), als Reaktion auf die Registrierung, von AOI-Ereignisabonnementsteuerinformationen, die die Endgerätevorrichtung (150) betreffen;
Bestimmen (S-425, S-538), basierend mindestens auf den AOI-Ereignisabonnementsteuerinformationen, ob ein AOI-Ereignisabonnement auf die Endgerätevorrichtung (150) angewendet werden soll; und
Auslösen (S-426; S-538) einer AOI-Ereignisüberwachung für die Endgerätevorrichtung (150), falls das AOI-Ereignisabonnenment auf die Endgerätevorrichtung (150) angewendet werden soll, wobei der AOI einen oder mehrere Teilbereiche einschließt und wobei die AOI-Ereignisabonnementsteuerinformationen für jede von einer oder mehreren Netzwerkentitäten (140-1, 140-2) einen oder mehrere Teilbereiche des AOI angeben, die der jeweiligen Netzwerkentität (140-2) zugeordnet sind.

2. Verfahren nach Anspruch 1, wobei
das Bestimmen (S-426; S-538) ob das AOI-Ereignisabonnement auf die Endgerätevorrichtung (150) angewendet werden soll, das Bestimmen umfasst, ob die AOI-Ereignisabonnementsteuerinformationen die bedienende Netzwerkentität (140-2) angeben, die dem Teilbereich zugeordnet ist, in dem die Endgerätevorrichtung (150) durch die bedienende Netzwerkentität (140-2) bedient wird.

3. Verfahren nach Anspruch 1 oder 2, wobei
das Bestimmen, ob das AOl-Ereignisabonnement auf die Endgerätevorrichtung (150) angewendet werden soll, das Bestimmen umfasst, ob die bedienende Netzwerkentität (140-2) eine AOI-Ereignisabonnementnachricht empfangen hat (S-516, S-522), die den Teilbereich angibt, in dem die Endgerätevorrichtung (150) durch die bedienende Netzwerkentität (140-2) bedient wird.

4. Verfahren nach Anspruch 3, umfassend
Empfangen (S-516, S-522) der AOI-Ereignisabonnementnachricht, die einen oder mehrere Teilbereiche angibt, für die das AOl-Ereignisabonnement anwendbar sein kann.

5. Verfahren nach Anspruch 4, wobei
die AOI-Ereignisabonnementnachricht keine bestimmte Endgerätevorrichtung (150) angibt, wobei das AOI-Ereignisabonnement wahlweise auf Endgerätevorrichtungen (150) angewendet werden soll, die durch die Netzwerkentität (140-2) in einem des einen oder der mehreren Teilbereiche bedient werden, die in der AOI-Ereignisabonnementnachricht angegeben sind.

6. Verfahren nach einem der Ansprüche 3 bis 5, wobei
die AOI-Ereignisabonnementnachricht vor dem Schritt des Registrierens als die bedienende Netzwerkentität (140-2) empfangen wird.

7. Verfahren nach einem der Ansprüche 3 bis 6, wobei
die AOI-Ereignisabonnementnachricht von einer Netzwerkexpositionsfunktion, NEF, (120) einer Kernnetzwerkdomäne empfangen wird, die für die 5. Generation, 5G, ausgelegt ist, insbesondere als eine Namf_EventExposure_Subscribe-Nachricht, oder von einem Gateway einer Dienstfähigkeitsexpositionsfunktion, SCEF, einer Kernnetzwerkdomäne, die für die 4. Generation, 4G, ausgelegt ist.

8. Verfahren nach einem der vorstehenden Ansprüche, wobei
das Verfahren durch eine Zugangs- und Mobilitätsverwaltungsfunktion, AMF, (140) einer für die 5. Generation, 5G, ausgelegten Kernnetzwerkdomäne oder eine Mobilitätsverwaltungseinheit, MME, einer für die 4. Generation, 4G, ausgelegten Kernnetzwerkdomäne durchgeführt wird.

9. Verfahren nach einem der vorstehenden Ansprüche, wobei
das Registrieren als die bedienende Netzwerkentität ein Senden (S-530) einer Registrierungsnachricht umfasst.

10. Verfahren nach Anspruch 9, wobei
die Registrierungsnachricht (i) an eines von einem einheitlichen Daten-Repository, UDR, (160) und einer einheitlichen Datenverwaltungsentität, UDM-Entität, (170) einer für die 5. Generation, 5G, ausgelegten Kernnetzdomäne oder (ii) an eines von einem einheitlichen Daten-Repository, UDR, und einem Heimteilnehmerserver, HSS, einer für die 4. Generation, 4G, ausgelegten Kernnetzdomäne gesendet wird.

11. Verfahren nach Anspruch 9 oder 10, umfassend
das Empfangen (S-536) von Teilnehmerdaten für die Endgerätevorrichtung (150) als Reaktion auf die Registrierungsnachricht, wobei die AOI-Ereignisabonnementsteuerinformationen zusammen mit oder als Teil der Teilnehmerdaten empfangen werden.

12. Verfahren nach einem der vorstehenden Ansprüche, wobei
der AOI einen oder mehrere Teilbereiche einschließt, wobei jeder Teilbereich mindestens einem von einer zugehörigen Verfolgungsbereichsidentität, TAI, einer zugehörigen Zellenkennung, einer zugehörigen Zugangsknotenkennung und einem zugehörigen Verfolgungsbereichscode, TAC, zugeordnet ist.

13. Verfahren nach einem der vorstehenden Ansprüche, wobei
die AOI-Benachrichtigungsereignisüberwachung das Bestimmen, dass die Endgerätevorrichtung (150) in den AOI eingetreten ist oder ihn verlassen hat, und das Senden einer entsprechenden AOI-Ereignisbenachrichtigung an einen Server (110) in einer Content-Provider-Domäne umfasst.

14. Einrichtung (140-2) zum Auslösen der Ereignisüberwachung für ein Ereignis, die angibt
ob eine Endgerätevorrichtung (150) in einem Bereich von Interesse, AOI, bedient wird, wobei die Einrichtung konfiguriert ist, um durch eine Netzwerkentität in einer Kernnetzwerkdomäne eines mobilen Kommunikationssystems (100) umfasst zu werden, und angepasst ist zum:
Erfassen (S-420; S-528), dass die Netzwerkentität (140-2) eine Endgerätevorrichtung (150) in einem Teilbereich zu bedienen hat;
Registrieren (S-422; S-530) als die bedienende Netzwerkentität (140-2) für die Endgerätevorrichtung (150);
Empfangen (S-424; S-536), als Reaktion auf die Registrierung, von AOI-Ereignisabonnementsteuerinformationen, die die Endgerätevorrichtung (150) betreffen;
Bestimmen (S-425, S-538), basierend mindestens auf den AOI-Ereignisabonnementsteuerinformationen, ob ein AOl-Ereignisabonnement auf die Endgerätevorrichtung (150) angewendet werden soll; und
Auslösen (S-426; S-538) einer AOI-Ereignisüberwachung für die Endgerätevorrichtung (150), falls das AOl-Ereignisabonnement auf die Endgerätevorrichtung (150) angewendet werden soll, wobei der AOI einen oder mehrere Teilbereiche einschließt und wobei die AOI-Ereignisabonnementsteuerinformationen für jede von einer oder mehreren Netzwerkentitäten (140-1, 140-2) einen oder mehrere Teilbereiche des AOI angeben, die der jeweiligen Netzwerkentität (140-2) zugeordnet sind.

15. Einrichtung nach Anspruch 14, die angepasst ist, um das Verfahren nach einem der Ansprüche 2 bis 13 durchzuführen.

## Revendications

1. Procédé de déclenchement de surveillance d'événements pour un événement indiquant si un dispositif terminal (150) est desservi dans une zone d'intérêt, AOI, le procédé comprenant les étapes suivantes mises en œuvre par une entité réseau (140) dans un domaine de réseau central d'un système de communication mobile (100) :
le fait de détecter (S-420 ; S-528) que l'entité réseau (140-2) doit desservir un dispositif terminal (150) dans une sous-zone ;
l'inscription (S-422 ; S-530) en tant qu'entité réseau de desserte (140-2) pour le dispositif terminal (150) ;
la réception (S-424 ; S-536), en réponse à l'inscription, d'informations de commande d'abonnement aux événements d'AOI se rapportant au dispositif terminal (150) ;
le fait de déterminer (S-425, S-538), en fonction au moins des informations de commande d'abonnement aux événements d'AOI, si un abonnement aux événements d'AOI doit être appliqué au dispositif terminal (150) ; et
le déclenchement (S-426 ; S-538) d'une surveillance d'événements d'AOI pour le dispositif terminal (150) si l'abonnement aux événements d'AOI doit être appliqué au dispositif terminal (150), dans lequel l'AOI comporte une ou plusieurs sous-zones, et dans lequel les informations de commande d'abonnement aux événements d'AOI indiquent, pour chacune parmi une ou plusieurs entités réseau (140-1,140-2), une ou plusieurs sous-zones de l'AOI associées à l'entité réseau (140-2) respective.

2. Procédé selon la revendication 1, dans lequel
le fait de déterminer (S-426 ; S-538) si l'abonnement aux événements d'AOI doit être appliqué au dispositif terminal (150) comprend le fait de déterminer si les informations de commande d'abonnement aux événements d'AOI indiquent l'entité réseau de desserte (140-2) en association avec la sous-zone dans laquelle le dispositif terminal (150) est desservi par l'entité réseau de desserte (140-2).

3. Procédé selon la revendication 1 ou 2, dans lequel
le fait de déterminer si l'abonnement aux événements d'AOI doit être appliqué au dispositif terminal (150) comprend le fait de déterminer si l'entité réseau de desserte (140-2) a reçu (S-516, S-522) un message d'abonnement aux événements d'AOI indiquant la sous-zone dans laquelle le dispositif terminal (150) est desservi par l'entité réseau de desserte (140-2).

4. Procédé selon la revendication 3, comprenant
la réception (S-516, S-522) du message d'abonnement aux événements d'AOI indiquant une ou plusieurs sous-zones pour lesquelles l'abonnement aux événements d'AOI peut s'appliquer.

5. Procédé selon la revendication 4, dans lequel
le message d'abonnement aux événements d'AOI n'indique aucun dispositif terminal particulier (150), dans lequel l'abonnement aux événements d'AOI doit être sélectivement appliqué à des dispositifs terminaux (150) qui sont desservis par l'entité réseau (140-2) dans l'une parmi la ou les sous-zones indiquées dans le message d'abonnement aux événements d'AOI.

6. Procédé selon l'une quelconque des revendications 3 à 5, dans lequel
le message d'abonnement aux événements d'AOI est reçu avant l'étape d'inscription en tant qu'entité réseau de desserte (140-2).

7. Procédé selon l'une quelconque des revendications 3 à 6, dans lequel
le message d'abonnement aux événements d'AOI est reçu d'une fonction d'exposition réseau, NEF, (120) d'un domaine de réseau central habilité 5^{ème} Génération, 5G, en particulier en tant que message Namf_EventExposure_Subscribe, ou d'une passerelle de fonction d'exposition de capacité de service, SCEF, d'un domaine de réseau central habilité 4^{ème} Génération, 4G.

8. Procédé selon l'une quelconque des revendications précédentes, dans lequel
le procédé est mis en œuvre par une fonction de gestion d'accès et de mobilité, AMF, (140) d'un domaine de réseau central habilité 5^{ème} Génération, 5G, ou une entité de gestion de mobilité, MME, d'un domaine de réseau central habilité 4^{ème} Génération, 4G.

9. Procédé selon l'une quelconque des revendications précédentes, dans lequel
l'inscription en tant qu'entité réseau de desserte comprend l'envoi (S-530) d'un message d'inscription.

10. Procédé selon la revendication 9, dans lequel
le message d'inscription est envoyé (i) à l'un parmi un référentiel de données unifié, UDR, (160) et une entité de gestion unifiée de données, UDM (170) d'un domaine de réseau central habilité 5ème Génération, 5G, ou (ii) à l'un parmi un référentiel de données unifié, UDR, et un serveur d'abonné domestique, HSS, d'un domaine de réseau central habilité 4ème Génération, 4G.

11. Procédé selon la revendication 9 ou 10, comprenant
la réception (S-536) de données d'abonné pour le dispositif terminal (150) en réponse au message d'inscription, dans lequel les informations de commande d'abonnement aux événements d'AOI sont reçues conjointement avec ou en tant que partie des données d'abonné.

12. Procédé selon l'une quelconque des revendications précédentes, dans lequel
l'AOI comporte une ou plusieurs sous-zones, dans lequel chaque sous-zone est associée à au moins l'un parmi une identité de zone de suivi, TAI, dédiée, un identificateur de cellule dédié, un identificateur de nœud d'accès dédié et un code de zone de suivi, TAC, dédié.

13. Procédé selon l'une quelconque des revendications précédentes, dans lequel
la surveillance d'événements de notification d'AOI comprend la détermination que le dispositif terminal (150) est entré dans, ou a quitté, l'AOI, et l'envoi d'une notification d'événement d'AOI correspondante vers un serveur (110) dans un domaine de fournisseur de contenu.

14. Appareil (140-2) permettant de déclencher une surveillance d'événements pour un événement indiquant
si un dispositif terminal (150) est desservi dans une zone d'intérêt, AOI, l'appareil étant configuré pour être compris par une entité réseau dans un domaine de réseau central d'un système de communication mobile (100) et conçu pour :
détecter (S-420 ; S-528) que l'entité réseau (140-2) doit desservir un dispositif terminal (150) dans une sous-zone ;
s'inscrire (S-422 ; S-530) en tant qu'entité réseau de desserte (140-2) pour le dispositif terminal (150) ;
recevoir (S-424 ; S-536), en réponse à l'inscription, des informations de commande d'abonnement aux événements d'AOI se rapportant au dispositif terminal (150) ;
déterminer (S-425, S-538), en fonction au moins des informations de commande d'abonnement aux événements d'AOI, si un abonnement aux événements d'AOI doit être appliqué au dispositif terminal (150) ; et
déclencher (S-426 ; S-538) une surveillance d'événements d'AOI pour le dispositif terminal (150) si l'abonnement aux événements d'AOI doit être appliqué au dispositif terminal (150), dans lequel l'AOI comporte une ou plusieurs sous-zones, et dans lequel les informations de commande d'abonnement aux événements d'AOI indiquent, pour chacune parmi une ou plusieurs entités réseau (140-1, 140-2), une ou plusieurs sous-zones de l'AOI associées à l'entité réseau (140-2) respective.

15. Appareil selon la revendication 14, conçu pour mettre en œuvre le procédé selon l'une quelconque des revendications 2 à 13.
